# EUROPEAN PATENT SPECIFICATION

(11) **EP 0 647 799 B1**
(45) Date of publication and mention of the grant of the patent: **02.09.1998**
(21) Application number: 94610047.6
(22) Date of filing: 12.10.1994
(51) Int. Cl.: F16H 25/20

(54) **Linear actuator**
Linearer Antrieb
Actuateur linéaire

(30) Priority: 12.10.1993 DK 114093
(43) Date of publication of application: 12.04.1995
(73) Proprietor: LINAK A/S, DK-6430 Nordborg (DK)
(72) Inventor: Jensen, Bent, DK-6430 Nordborg (DE)
(74) Representative: Pedersen, Soeren Skovgaard

(56) References cited:
- FR-A- 1 393 860
- GB-A- 779 420
- US-A- 2 446 393
- US-A- 2 590 251
- US-A- 3 682 283

## Description

The invention concerns a linear actuator comprising a motor, a screw spindle, a driving nut, a driving rod connected to the driving nut (4) and a limit switch.

Linear actuators are used for exerting linear forces along a given stroke which is termined by the maximum travel of the driving nut on the screw spindle. It is desirable to determine that a limit has been reached in order to disconnect the drive current, because otherwise an undesired tightening of the driving nut might occur which would require a large force to undo, and furthermore a large increase in the drive current would take place and overload of the drive mechanism in general.

A known solution to this problem which causes the interruption of the drive current is to monitor the same and to switch it off when it reaches an upper limit. However, this does not prevent the tightening of the nut mentioned, and the weakness of this solution lies in the fact that an excess current which would be acceptable to overcome a resistance in the working range of the spindle would be above the limit that has to be defined in order to avoid the tightening of the nut on the spindle. Another solution uses an electronic counter for determining the absolute rotation of the screw spindle and hence the position of the nut, but such a counter is dependent on an uninterrupted power supply.

A further solution is described in closest prior art GB 2 175 710A which relates to obtaining automatic oscillatory motion in an apparatus comprising components which effectively constitute a linear actuator but which is coupled with limit switches for reversing the polarity in order that the moveable components oscillate back and forth continuously as they travel from one limit to the other. The limit switch itself is controlled by a loosely sliding rod parallel to the drive screw, which rod is pushed by the nut when it reaches adjustable stop collars which are fitted to the rod. Furthermore a switch is provided for cutting off entirely the drive current in case the travel exceeds the limit. This apparatus is a complex mechanism which is specifically adapted to the needs of the paper making industry.

From FR-A-1 393 860 is known a device for compressing waste material said device comprising a tubular driving rod operated by a screw spindle having a nut where the nut is provided with a radially protruding switch operating means. This switch operating means on the nut is together with the switches themselves provided with axially compressible springs, so as to smoothen the stopping of the movement of the nut and the connected transport rod thereto. However, this switch arrangement is responsive to load on the driving rod rather than the position of the rod and the driving nut.

The limit switch arrangement of the linear actuator described in GB-patent specification 779,420 consists of two limit switches that are placed with a distance from each other that is substantially equal to the allowed travelling distance of the driving rod.

Common for such known linear actuators is that the function of the limit switch arrangements requires that such arrangements must extent a distance along the actuator that is substantially similar to the travelling distance of the driving rod. The linear actuators therefore become rather bulky in their construction and take up quite a substantial amount of space because of the switch arrangements fitted.

The object of the present invention is to provide a linear actuator of the initially mentioned kind that solves the problem of undesirable tightening of the nut.

The invention solves the problem and provides an efficient stop in that internal projections in a protective tubular housing for the driving rod constitute catches for the nut in its extreme positions while one end of the protective tubular housing operates the switch.

In an advantageous embodiment the protective tubular housing is secured against axial displacement in the drive position and influenced by a returning spring force in its extreme positions.

In a further advantageous embodiment the switch is constituted by a pair of oppositely oriented microswitches, where a chamfered edge of the protective tubular housing actuates the buttons of the switches in such a manner that one extreme position causes both microswitches to be actuated and the other extreme position causes both microswitches to be non-actuated, whereby the position of the microswitches controls the current supply to the motor.

The invention will be described in greater detail in the following with reference to the drawing in which,
Fig. 1 shows a longitudinal section through a linear actuator according to an embodiment of the invention, and
Fig. 2 shows an enlarged part of the longitudinal section of Fig. 1.

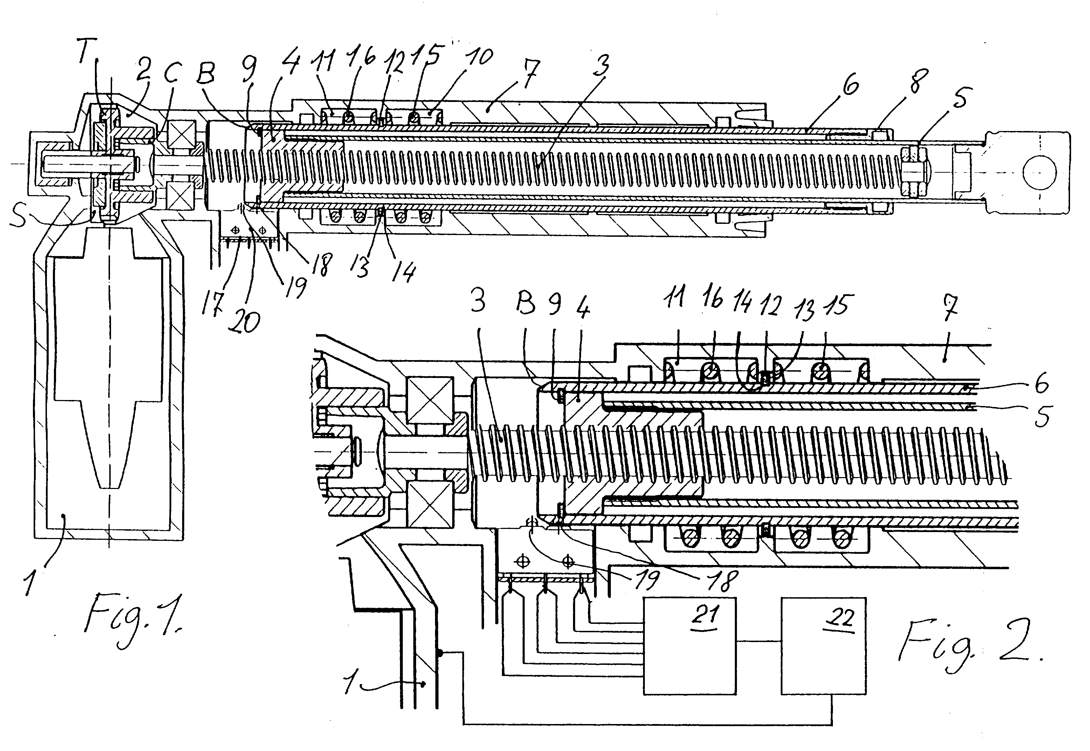

In Fig. 1 there is schematically shown a linear actuator comprising a motor part 1, a drive 2 for reversible rotation of a screw spindle 3 which engages a drive nut 4. In the embodiment shown the drive is a worm drive with the worm S and the worm wheel T, and an

elastic coupling C is fitted between the worm wheel and the screw spindle. The drive nut is connected to a drive rod 5 which is surrounded by a protective tube 6 which is partly encased in a housing 7 which is connected to the motor part 1 and the drive 2. The protective tube 6 is fitted with a polymer bushing 8 through which the drive rod passes, the surface of which being polished. At the other end the protective tube is supplied with a spring clip 9 in a groove. In the housing 7 two cylindrical chambers 10 and 11 are shaped separated by a wall 12, and a locking ring 13 is fitted in a groove 14 in the protective tube precisely opposite the wall 12. In the cylindrical chambers 10 and 11 and surrounding the protective tube 6 there is fitted compression springs 15 and 16 which are coil springs with their ends ground flat.

The end of the protective tube being nearest to the drive 2 and which is fitted with the spring clip 9 is chamfered on the outside at B in order that a microswitch 17 which is fitted in the housing 7 has its button 18 pressed in by the tube while the button 19 on a corresponding microswitch 20 is not engaged by the tube. The two microswitches in this embodiment are identical, however oppositely oriented, and since they commonly have buttons which are asymmetrically fitted the desired distance between the buttons is obtained in this manner.

In the drive position for the linear actuator the forces are transferred from the drive nut to the driving rod, and the protective tube is guided axially by the end parts of the compression springs 15 and 16 at the wall 12. When the nut at one extreme position is pulled completely against the drive 2 it pushes against the spring clip 9 and thereby pulls the protective tube 6. The locking ring 13 abuts the coil spring 16 and compresses it somewhat while the whole tube moves towards the drive 2 causing first the chamfer B and then the outer surface of the tube to engage the button 19 of the microswitch 20. This breaks the motor current, either directly or via an electronic circuit, and from this moment the motor may only be activated to rotate in the opposite direction. During the first part of the movement the protective tube returns to the drive position with the locking ring between the two coil springs.

In the other extreme position the drive nut 4 will push the polymer bushing 8 which will cause a pull on the protective tube so that the locking ring 13 compresses the coil spring 15 somewhat, and hence the surface of the protective tube 6 and later the chamfer B get out of engagement with the button 18 of the microswitch 17 causing the motor current to be broken directly or indirectly. After reversal which instantly is the only direction possible the protective tube is pushed back into the drive position by the coil spring 15 and the contacts of the microswitches regain their drive positions.

In Fig. 2 is shown an enlarged part of the same embodiment, where a logic circuit 21 has been connected to the microswitches 17 and 20 in order to control the polarity of the power supply 22 for the motor part 1. It will be noted that the placement of the connectors to the microswitches 17 and 20 are disposed identically but in separate planes, even though the microswitches are reversed with respect to each other. A number of the elements of Fig. 1 are also found here.

According to the invention it is also feasible to let the two microswitches be fitted not against each other but at different places along the perimeter of the chamfered edge B of the protective tube 6 or in conjunction with milled grooves in the surface of the tube 6 which may cooperate with the buttons 18 and 19.

## Claims

1. A linear actuator comprising a motor (1), a screw spindle (3), a driving nut (4), a driving rod (5) connected to the driving nut (4) and a limit switch (17, 20), characterized in that internal projections (8, 9) in a protective tubular housing (6) for the driving rod (5) constitute catches for the nut (4) in its extreme positions while one end of the protective tubular housing (6) operates the limit switch (17, 20).

2. An actuator according to claim 1, characterized in that the protective tubular housing (6) is substantially stationary in the drive position and influenced by a returning spring force in its extreme positions.

3. An actuator according to claim 2, characterized in that the switch (17, 20) is constituted by a pair of microswitches reversed with respect to each other, where a chamfered edge (B) of the protective tubular housing (6) actuates the buttons (18, 19) of the switches in such a manner that one extreme position causes both microswitches to be actuated and the other extreme positions causes both microswitches to be non-actuated, whereby the position of the microswitches controls the current supply to the motor (1).

## Patentansprüche

1. Ein Linearantrieb, umfassend einen Motor (1), eine Schraubspindel (3), eine Antriebsmutter (4), eine Triebstange (5), die mit der Antriebsmutter (4) verbunden ist, und einen Begrenzungsschalter (17, 20), dadurch gekennzeichnet, daß innere Vorsprünge (8, 9) in einem rohrförmigen Schutzgehäuse (6) für die Triebstange (5) Sperren für die Mutter (4) in ihrer Extremstellung bilden, während ein Ende des rohrförmigen Schutzgehäuses (6) den Begrenzungsschalter (17, 20) betätigt.

2. Ein Antrieb nach Anspruch 1, dadurch gekennzeichnet, daß das rohrförmige Schutzgehäuse (6) in der Triebsstellung im wesentlichen stationär und in seinen Extremstellungen von einer Rückholfederkraft beeinflußt wird.

3. Ein Antrieb nach Anspruch 2, dadurch gekennzeichnet, daß der Schalter (17, 20) von einem Paar zueinander umgekehrten Mikroschaltern gebildet wird, wobei ein abgeschrägter Rand (B) des rohrförmigen Schutzgehäuses (6) die Knöpfe (18, 19) der Schalter in einer solchen Weise betätigt, daß eine Extremstellung auslöst, daß beide Mikroschalter betätigt werden, und die andere Extremstellung auslöst, daß beide Mikroschalter nicht betätigt werden, wodurch die Stellung der Mikroschalter die Stromversorgung des Motors (1) steuert.

## Revendications

1. Actionneur linéaire comprenant un moteur (1), un arbre fileté (3), un écrou d'entraînement (4), une tige d'entraînement (5) reliée à l'écrou d'entraînement (4) et un commutateur, de fin de course (17,20),
caractérisé en ce que des saillies internes (8,9) dans un boîtier tubulaire de protection (6) pour la tige d'entraînement (5) constituent des arrêts pour l'écrou (4) dans ses positions extrêmes, tandis qu'une extrémité du boîtier tubulaire de protection (6) actionne le commutateur de fin de course (17,20).

2. Actionneur selon la revendication 1,
caractérisé en ce que le boîtier tubulaire de protection (6) est sensiblement immobile dans la position d'entraînement et sollicité par une force élastique de rappel dans ses positions extrêmes.

3. Actionneur selon la revendication 2,
caractérisé en ce que le commutateur (17,20) est constitué par une paire de microcommutateurs inversés l'un par rapport à l'autre, où un bord chanfreiné (B) du boîtier tubulaire de protection (6) actionne les boutons (18,19) des commutateurs de telle manière qu'une position extrême entraîne le fonctionnement des deux microcommutateurs et que l'autre position extrême entraîne le non-fonctionnement des deux microcommutateurs, par quoi la position des microcommutateurs commande l'alimentation en courant du moteur (1).
